# EUROPEAN PATENT SPECIFICATION

(11) **EP 0 406 662 B1**
(45) Date of publication and mention of the grant of the patent: **22.03.1995**
(21) Application number: 90112066.7
(22) Date of filing: 25.06.1990
(51) Int. Cl.: C01F 11/18, C08K 3/26, D21H 13/46

(54) **Process for producing aragonite crystal form calcium carbonate with acicular shape**
Verfahren zur Herstellung von nadelförmigem Calciumcarbonat mit aragonit Kristallstruktur
Procédé de fabrication de carbonate de calcium de la forme cristalline de l'aragonite et de morphologie aciculaire

(30) Priority: 29.06.1989 JP 167267/89
(43) Date of publication of application: 09.01.1991
(73) Proprietor: MARUO CALCIUM COMPANY LIMITED, Akashi-shi Hyogo-ken (JP)
(72) Inventor: Katayama, Hiroaki, Himeiji-shi, Hyogo-ken (JP); Shibata, Hiroshi, Akashi-shi, Hyogo-ken (JP); Fujiwara, Toshio, Himeji-shi, Hyogo-ken (JP)
(74) Representative: Grünecker, Kinkeldey, Stockmair & Schwanhäusser Anwaltssozietät

(56) References cited:
- EP-A- 0 143 363
- GB-A- 2 145 074
- CHEMICAL ABSTRACTS, vol 99, no. 4, 25 July 1983, Columbus, Ohio, USA; Okutama Kogyo Co: "Columnar aragonite.", page 141; ref. no. 24953 H & JP-A-58036924
- PATENT ABSTRACTS OF JAPAN vol. 13, no. 69 (C-569)(3417) 16 February 1989,& JP-A-63 260815
- PATENT ABSTRACTS OF JAPAN vol. 13, no. 24 (C-561)(3372) 19 January 1989, & JP-A-63 230520

## Description

The present invention relates to a process for producing aragonite crystal form calcium carbonate with a large particle size and an acicular shape (hereinafter referred to as "aragonite calcium carbonate" ).

Aragonite crystal form calcium carbonate (hereinafter referred to as "aragonite" or "aragonite calcium carbonate") is superior in dispersibility of particles to calcite crystal form calcium carbonate (hereinafter referred to as "calcite" or "calcite calcium carbonate"). Furthermore, a cylindrical crystal habit of aragonite which does not exist in calcite, shows various characteristics which are not expected in calcite. Therefore, a more effective industrial production of aragonite has been attempted up to now. However, aragonite prepared by each of those processes is of a fine acicular shape (nearly 0.5 - 3.0 »m in a long diameter, 0.1 - 0.7 »m in a short diameter) and has been utilized on the surface of coated paper to improve its printability. For example, in the prior art for the gas-liquid reaction of a Ca(OH)₂ slurry and CO₂ gas, a process for regulating the amount of CO₂ gas stepwise in the carbonation step is proposed JP-A-55-51852, and a process for adding in advance a crystal nucleus formation agent into the Ca (OH)₂ slurry is disclosed JP-A-59-223225).

A process for the production of a larger acicular aragonite for various industrial uses is desired. Although processes forming larger acicular shaped aragonite are disclosed in, for example JP-A-62-278123 and JP-A-62-27325, these processes have a much lower production efficiency because of starting from a water-saturated solution of calcium hydroxide (the solubility of Ca(OH)₂ is 0.185 g per 100 g of water at 0 °C.) and hence are extremely inadequate as processes on an industrial scale In JP-A-58-36924, a process for growing particles by carbonation within a range of 1 - 5 in molar ratio of aragonite calcium carbonate to calcium hydroxide is disclosed. However, the particle size of aragonite calcium carbonate prepared in the manner as stated above is at most 1.4 - 4.5 »m in a long diameter and 0.12 - 0.6 »m in a short diameter, and it is apt to change into almost calcite type when increasing the above molar ratio for larger particle sizes.

As mentioned above, it is the present state that a process for commercially producing aragonite calcium carbonate with an acicular shape having a large particle size, namely 10 - 100 »m level in a long diameter, has not yet been established.

It is therefore the object of the present invention to provide a process for producing aragonite calcium carbonate with a large particle size in an acicular shape, more efficiently on an industrial scale, and in particular with a larger particle size than ever before.

In accordance with the present invention this object is attained with a process for producing aragonite crystal form calcium carbonate with an acicular shape having a larger particle size than the aragonite crystal form calcium carbonate starting material which comprises
premixing aragonite crystal form calcium carbonate having an acicular shape and Ca(OH)₂ in a molar ratio of 1:7 - 1:5000 to prepare an aqueous slurry,
adding at least one compound selected from the group consisting of H₃PO₄, K₃PO₄, KH₂PO₄, K₂HPO₄, Na₂HPO₄·12H₂O and (NH₄)₃PO₄·3H₂O into the aqueous slurry, and
introducing CO₂ gas into the aqueous slurry to cause the carbonation reaction to take place,
thereby producing aragonite crystal form calcium carbonate having an acicular shape and a particle size of 10 to 100 »m by 0.5 to 4.0 »m.

The invention is described in detail in connection with the drawings in which
Figure 1 is a microphotograph showing a crystal structure of aragonite calcium carbonate obtained in Example 2.
Figure 2 is a microphotograph showing a crystal structure of aragonite calcium carbonate used generally for the conventional coated paper.

In the present invention, aragonite calcium carbonate with an acicular shape to be premixed into an aqueous slurry of Ca(OH)₂ preferably has a particle size of 0.5 - 10.0 »m in a long diameter and 0.1 - 1.0 »m in a short diameter, and that formed by the processes disclosed by, for example, JP-A-63-256514 and JP-A-63-260815 can be used.

The molar ratio of the aragonite calcium carbonate to the Ca(OH)₂ slurry is 1 : 7 - 1 : 5000 finally. More preferably it is 1 : 10 - 1 : 2000. When the molar ratio is less than 1 : 7, it is difficult to get the intended large particles, and when it is more than 1 : 5000, fine particles are included therein, and the production efficiency decreases because of a lengthened reaction time. In such a case, it is preferable to repeatedly mix the aragonite calcium carbonate and Ca(OH)₂ slurry and repeatedly carry out the reactions for more homogeneous particles rather than just once when dividing into several reactions, for example, firstly, mixing aragonite calcium carbonate and Ca(OH)₂ slurry at the molar ratio of 1 : 10 and introducing CO₂ gas to thus complete the carbonation reaction, then conducting the next reaction in a similar way by mixing the obtained aragonite calcium carbonate slurry and Ca(OH)₂ slurry at the molar ratio of 1 : 10, the molar ratio of the original aragonite calcium carbonate and Ca(OH)₂ slurry is calculated as finally 1 : 100. Furthermore, when reacting the obtained aragonite calcium carbonate slurry with Ca(OH)₂ slurry at the molar ratio of 1 : 10, namely, repeating the carbonation reactions three times, the final ratio is 1 : 1000. In this case, a water-soluble phosphoric acid compound selected from the group stated above must be added for each reaction. Though such an operation can be repeated four times or five times, it is preferable that the carbonation reactions are carried out not more than three times in view of the production efficiency. When repeating the mixing step and the reaction of aragonite calcium carbonate and Ca(OH)₂ slurry several times, for example three times, the mixed proportion (molar ratio) per mixing of aragonite calcium carbonate: Ca(OH)₂ is preferably 1 : 3 to 1 : 18, more preferably 1 : 3 to 1 : 13.

The concentration of the mixed slurry of the aragonite calcium carbonate and Ca(OH)₂ is preferably 30 - 250 g/ℓ, more preferably 100 - 230 g/ℓ.

A water-soluble phosphoric acid compound, namely a phosphoric acid salt selected from the group consisting of H₃PO₄, K₃PO₄, KH₂PO₄, K₂HPO₄, Na₂HPO₄.12H₂O and (NH₄)₃PO₄.3H₂O is added to the slurry either singly or in combination of two or more.

The level of solubility is preferably not less than 0.1 g per 100 mℓ of water at a temperature of 20 °C, more preferably, not less than 5.0 g per 100 mℓ of water at a temperature of 20 °C. The amount added is preferably 0.1 to 15 % by weight, more preferably 0.3 - 5.0 % by weight based on Ca(OH)₂.

The temperature of the carbonation is preferably 20 - 80 °C, more preferably 35 - 70 °C. The amount of CO₂ gas introduced as 100 % CO₂ is preferably not more than 4ℓ/min/kg.Ca(OH)₂, more preferably not more than 2ℓ/min/kg.Ca(OH)₂.

According to the process as stated above, aragonite calcium carbonate with a large particle size, namely 10 - 100 »m in a long diameter and 0.5 - 4.0 »m in a short diameter can be produced.

As for regulating the particle size of the aragonite calcium carbonate, within a constant limit, the higher the molar ratio of Ca(OH)₂ to aragonite calcium carbonate is in the starting material, the larger the long diameter and the short diameter of the formed particles will be.

A process for increasing the particle size of the original aragonite calcium carbonate by the carbonation of the mixed slurry of aragonite calcium carbonate and Ca(OH)₂ is proposed, as stated earlier, by JP-A-58-36924. This proposed technology and the present invention both aim at growing the particle size by conducting further carbonation on the surface of the original aragonite calcium carbonate. However, the molar ratio of aragonite calcium carbonate to calcium hydroxide in JP-A-58-36924 is within a range of from 1 - 5. At this level of the molar ratio, the carbonation is sufficient to proceed on the surface of the original aragonite calcium carbonate even without adding a soluble phosphoric acid compound to the mixed slurry and growth of the particle is attained. However its particle size is at largest 4.5 »m in a longer diameter. In contrast, in case where the molar ratio is 1 : 7 - 1 : 5000, the carbonation cannot proceed on the surface of the original aragonite calcium carbonate without adding a water-soluble phosphoric acid compound. More concretely, it only results in the formation of new aragonite fine particles or the formation of calcite calcium carbonate. It is not until adding the above-mentioned phosphoric acid compound according to the invention that the carbonation proceeds on the surface of the original aragonite calcium carbonate to enable it to grow thereon.

A process for forming aragonite by adding a water-soluble phosphoric acid compound is described in JP-A-63-25614. The formation mechanism of aragonite in this case, as described in the official patent gazette specification, is that phosphoric acid calcium is formed by adding a soluble phosphoric acid compounds to the reaction system of an aqueous slurry of Ca(OH)₂ and CO₂ gas, and then crystal nuclei are formed. That is, the soluble phosphoric acid compound plays a role in forming calcium phosphate as new aragonite crystal nuclei where aragonite crystals grow.

On the other hand, in the present invention a soluble phosphoric acid compound according to the invention is added for the growth of crystal of aragonite calcium carbonate, and hence the role performed by the soluble phosphoric acid compound is different from that in JP-A-63-25614. Considering the formation mechanism in JP-A-63-256514, it is supposed that the addition of a soluble phosphoric acid compound does not result in a growth of an aragonite crystal, but rather results in the formation of a new crystal nucleus, this leading to the formation of new fine aragonite crystals. However, the present inventors now found that following the addition of the soluble phosphoric acid compound according to the present invention to an aqueous slurry of aragonite calcium carbonate and Ca(OH)₂ the aragonite crystal grows unexpectedly.

The acicular-shaped aragonite calcium carbonate of the present invention is especially used e.g., for plastics, paper making and heat insulating material. In plastics, the effect of imparting rigidity as a filler to polypropylene, in particular, is remarkable. Though conventional fillers imparting rigidity to polypropylene are e.g., talc, wollastonite and glass fiber, talc and wollastonite are bad in whiteness owing to natural resources and are inferior in impact strength for irregular particle size and inclusion of coarse particles. Glass fiber is good in rigidity but bad in surface smoothness and it also includes problems with respect to, e.g., workability, labor hygiene and cost. The aragonite calcium carbonate obtained by the present invention is a new material solving these problems. In paper making, the use of such large acicular particles as a filler can provide for mixing a greater amount of an inorganic material into pulp (the amount of pulp to inorganic material is up to approximately 1/9). Conventional small acicular-shaped calcium carbonate cannot efficiently be mixed into pulp during paper making and its content cannot be raised. Such an inorganic material paper can be applied to, for example, indoor interiors as an incombustible paper. The aragonite calcium carbonate of the present invention has such a specific acicular shape that sufficient spaces are formed between the particles and thus it can be used preferably for e.g., heat insulating materials and filter materials. Furthermore, it can be used, for example, as a thickener for various pastes, sealing materials and paints. It is considered that thixotropy coming from the acicular shape can be provided in these fields.

The invention will be described in more detail with reference to the following examples and comparative example.

### Example 1

Aragonite calcium carbonate with an acicular shape of 3 »m in a long diameter and 0.3 »m in a short diameter and calcium hydroxide were mixed at the molar ratio of CaCO₃/Ca(OH)₂ of 1/15, so that an aqueous slurry had a concentration of 150 g/ℓ after mixing. Phosphoric acid in an amount of 2.0 % by weight with respect to Ca(OH)₂ was added into the aqueous slurry. After adjusting the slurry temperature to 50 °C, the carbonation reaction was carried out with introducing CO₂ gas (at 100 % purity) at a flow rate of 1ℓ/min/kg.Ca(OH)₂ into 30ℓ of the slurry. The concentration of the CO₂ gas was 30 % in this case.

### Example 2

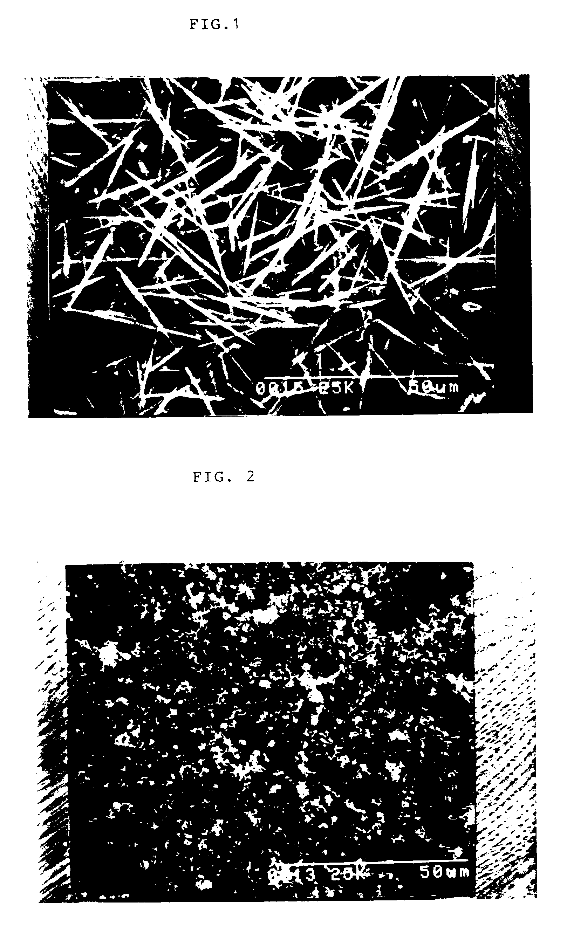

Except that the mixed molar ratio of CaCO₃/Ca(OH)₂ was changed to 1/30, the preparation was carried out in the same manner as in Example 1. The crystal structure of the obtained aragonite calcium carbonate is shown in Figure 1.

### Example 3

The aragonite calcium carbonite with an acicular shape of 20 »m in the mean long diameter and 1.0 »m in the mean short diameter formed in Example 1 and Ca(OH)₂ were mixed at the molar ratio of 1/15, and the carbonation reaction was completed in the same manner as in Example 1.

### Example 4

Except that the mixed molar ratio of CaCO₃/Ca(OH)₂ was changed to 1/7, the preparation was carried out in the same manner as in Example 1.

### Example 5

Except that the mixed molar ratio of CaCO₃/Ca(OH)₂ was changed to 1/10, the preparation was carried out in the same manner as in Example 1.

### Example 6

Except that the mixed molar ratio of CaCO₃/Ca(OH)₂ was changed to 1/100, the preparation was carried out in the same manner as in Example 1.

### Example 7

Except that the mixed molar ratio of the aragonite calcium carbonate with an acicular shape of 15 »m in the mean long diameter and 0.9 »m in the mean short diameter formed in Example 5 and Ca(OH)₂ was adjusted to 1/10 in the mixed molar ratio, the preparation was carried out in the same manner as in Example 1.

### Example 8

Except that the mixed molar ratios of the aragonite calcium carbonate with an acicular shape of 50 »m in the mean long diameter and 1.8 »m in the mean short diameter formed in Example 3 and Ca(OH)₂ was adjusted to 1/15 in the mixed molar ratio, the preparation was carried out in the same manner as in Example 1.

### Example 9

The aragonite calcium carbonate with an acicular shape of 50 »m in the mean long diameter and 1.8 »m in the mean short diameter formed in Example 3 and Ca(OH)₂ were mixed at the molar ratio of 1/25, and the carbonation reaction was completed in the same manner as in Example 1.

### Comparative Example 1

Except that the phosphoric acid was not added into the mixed slurry in Example 1, the preparation was carried out in the same manner as in Example 1.

The particle shapes of the aragonite calcium carbonate formed in Examples and Comparative Example are shown in Table 1.

**Table 1**

| | |
|---|---|
| Example 1 | Aragonite calcium carbonate with an acicular shape of 20 »m in the mean long diameter and 1.0 »m in the mean short diameter. |
| Example 2 | Aragonite calcium carbonate with an acicular shape of 30 »m in the mean long diameter and 1.5 »m in the mean short diameter. |
| Example 3 | Aragonite calcium carbonate with an acicular shape of 50 »m in the mean long diameter and 1.8 »m in the mean short diameter. |
| Example 4 | Aragonite calcium carbonate with an acicular shape of 10 »m in the mean long diameter and 0.8 »m in the mean short diameter. |
| Example 5 | Aragonite calcium carbonate with an acicular shape of 15 »m in the mean long diameter and 0.9 »m in the mean short diameter. |
| Example 6 | Having 40 »m in the mean long diameter and 1.7 »m in the mean short diameter, fine acicular shape aragonite is included and the particle size is slightly irregular. |
| Example 7 | Aragonite calcium carbonate with a uniform acicular shape of 40 »m in the mean long diameter and 1.7 »m in the mean short diameter. |
| Example 8 | Aragonite calcium carbonate with an acicular shape of 70 »m in the mean long diameter and 2.0 »m in the mean short diameter. |
| Example 9 | Having 80 »m in the mean long diameter and 2.0 »m in the mean short diameter, fine acicular shape aragonite is included and the particle size is slightly irregular. |
| Comparative Example 1 | Calcite type calcium carbonate with an almost fusiform shape. |

By the comparison of Examples 4, 5, 1 and 6, it is to be understood that the more Ca(OH)₂ in the mixed molar ratio of CaCO₃/Ca(OH)₂, the larger the particle size of the obtained aragonite calcium carbonate. Also, comparing Examples 6 and 7, it is to be understood that a more uniform particle size can be formed by a two-step reaction.

### Application Example

The aragonite calcium carbonate formed in Example 2 was blended with a polypropylene resin in the manner described below and the strength property was measured.

### (1) Test method

| Blending ratio: | |
|---|---|
| Polypropylene resin (trade name MA-3, manufactured by Mitsubishi Yuka) | 100 parts by weight |
| Aragonite calcium carbonate | 30 parts by weight |

After kneading at this blending ratio and pelletizing, the strength property was measured by using a test piece obtained by injection molding.

As comparative materials, talc (manufactured by Fuji Talc, PKS-100) used widely as a filler for polypropylene resin, and heavy calcium carbonate (manufactured by Maruo Calcium Co., Super 3S) were used and the same operation was carried out. The results are shown in Table 2.

**Table 2**

| | Aragonite calcium carbonate of Example 2 | Talc | Heavy calcium carbonate |
|---|---|---|---|
| Bending strength (kg/cm²) | 510 | 530 | 420 |
| Bending elastic modulus (kg/cm²) | 37500 | 32200 | 19500 |
| Izod impact strength (kg · cm/cm²) (at 20°C) | 10.1 | 5.3 | 7.9 |

From the above results, it is to be understood that when the aragonite calcium carbonate of the present invention is blended with a polypropylene resin, an excellent strength property is obtained. The conventional filler, for example, talc has a high bending elastic modulus but a low Izod impact strength, so that both properties cannot be maintained. However, the aragonite calcium carbonate of the present invention can give a good balance for both properties. It is also expected to improve properties further by surface treatment wish a substance having a good compatibility with the polypropylene resin.

## Claims

1. A process for producing aragonite crystal form calcium carbonate with an acicular shape having a larger particle size than the aragonite crystal form calcium carbonate starting material which comprises
premixing aragonite crystal form calcium carbonate having an acicular shape and Ca(OH)₂ in a molar ratio of 1:7 - 1:5000 to prepare an aqueous slurry,
adding at least one compound selected from the group consisting of H₃PO₄, K₃PO₄, KH₂PO₄, K₂HPO₄, Na₂HPO₄·12H₂O and (NH₄)₃PO₄·3H₂O into the aqueous slurry, and
introducing CO₂ gas into the aqueous slurry to cause the carbonation reaction to take place,
thereby producing aragonite crystal form calcium carbonate having an acicular shape and a particle size of 10 to 100 »m by 0.5 to 4.0 »m.

2. The process of claim 1 wherein the aragonite crystal form calcium carbonate is premixed with the Ca(OH)₂ in a molar ratio of 1:10 - 1:2000.

3. The process of claim 1, wherein the aragonite crystal form calcium carbonate to be premixed with an aqueous slurry of Ca(OH)₂ has an acicular shape of 0.5 - 10.0 »m in a long diameter and 0.1 - 1.0 »m in a short diameter.

4. The process of claim 1 wherein the carbonation reaction is repeated at least twice.

5. The process of claim 4 wherein the aragonite crystal form calcium carbonate to be premixed with the aqueous slurry of Ca(OH)₂ after the second carbonation has 5 - 50 »m in a long diameter and 0.5 - 4.0 »m in a short diameter.

6. The process of claim 1 or 4 wherein the concentration of the mixed slurry of the aragonite crystal form calcium carbonate and the Ca(OH)₂ is 30 - 250 g/l.

7. The process of claim 1 or 4 wherein the introduction amount of CO₂ gas as 100 % CO₂ is not more than 4l/min/kg.Ca(OH)₂.

8. The process of claim 1 or 4 wherein the temperature of the carbonation reaction is 20 - 80°C.

9. The process of claim 1 wherein an addition amount of the at least one compound selected from the group consisting of H₃PO₄, K₃PO₄, KH₂PO₄, K₂HPO₄, Na₂HPO₄·12H₂O and (NH₄)₃PO₄·3H₂O is 0.1 - 15% by weight based on the Ca(OH)₂.

## Patentansprüche

1. Verfahren zum Herstellen von Calciumcarbonat in Aragonitkristallform mit einer aciculären Form mit einer größeren Teilchengröße als das Calciumcarbonatausgangsmaterial in Aragonitkristallform, welches
- das vormischen von Calciumcarbonat in Aragonitkristallform mit einer aciculären Form und von Ca(OH)₂ in einem Molverhältnis von 1:7 bis 1:5000, um eine wäßrige Aufschlämmung herzustellen,
- das Zufügen von mindestens einer Verbindung, ausgewählt aus der Gruppe, bestehend aus H₃PO₄, K₃PO₄, KH₂PO₄, K₂HPO₄, Na₂HPO₄.12H₂O und (NH₄)₃PO₄.3H₂O, zu der wäßrigen Aufschlämmung und
- das Einführen von CO₂-Gas in die wäßrige Aufschlämmung, um die Carbonisierungsreaktion zu verursachen,
umfaßt, wodurch Calciumcarbonat in Aragonitkristallform mit einer aciculären Form und einer Teilchengröße von 10 bis 100 »m x 0,5 bis 4,0 »m hergestellt wird.

2. Verfahren nach Anspruch 1, wobei das Calciumcarbonat in Aragonitkristallform mit dem Ca(OH)₂ in einem Molverhältnis von 1:10 bis 1:2000 vorgemischt wird.

3. Verfahren nach Anspruch 1, wobei das Calciumcarbonat in Aragonitkristallform, das mit einer wäßrigen Aufschlämmung aus Ca(OH)₂ vorgemischt wird, eine aciculäre Form mit einem langen Durchmesser von 0,5 bis 10,0 »m und einem kurzen Durchmesser 0,1 bis 1,0 »m hat.

4. Verfahren nach Anspruch 1, wobei die Carbonisierungsreaktion mindestens zweimal wiederholt wird.

5. Verfahren nach Anspruch 4, wobei das Calciumcarbonat in Aragonitkristallform, das mit der wäßrigen Aufschlämmung von Ca(OH)₂ vorgemischt wird, nach der zweiten Carbonisierung einen langen Durchmesser von 5 bis 50 »m und einen kurzen Durchmesser von 0,5 bis 4,0 »m aufweist.

6. Verfahren nach Anspruch 1 oder 4, wobei die Konzentration der gemischten Aufschlämmung aus dem Calciumcarbonat in Aragonitkristallform und dem Ca(OH)₂ 30 bis 250 g/l ist.

7. Verfahren nach Anspruch 1 oder 4, wobei die Einführungsmenge des CO₂-Gases als 100 % CO₂ nicht mehr als 41/min/kg.Ca(OH)₂ beträgt.

8. Verfahren nach Anspruch 1 oder 4, wobei die Temperatur der Carbonisierungsreaktion 20 bis 80°C beträgt.

9. Verfahren nach Anspruch 1, wobei die Zugabemenge der mindestens einen Verbindung, ausgewählt aus der Gruppe, bestehend aus H₃PO₄, K₃PO₄, KH₂PO₄, K₂HPO₄, Na₂HPO₄.12H₂O und (NH₄)₃PO₄.3H₂O, 0,1 bis 15 Gew.-%, bezogen auf das Ca(OH)₂, beträgt.

## Revendications

1. Procédé de fabrication de carbonate de calcium sous forme d'un cristal d'aragonite et de morphologie aciculaire ayant une taille de particule supérieure à celle du matériau de départ constitué de carbonate de calcium sous forme de cristal d'aragonite, qui comprend:
le mélange préalable de carbonate de calcium sous forme de cristal d'aragonite de morphologie aciculaire et de Ca(OH)₂ selon un rapport molaire de 1:7 - 1:5000 pour préparer une bouillie aqueuse,
l'addition d'au moins un composé sélectionné dans le groupe constitué de H₃PO₄, K₃PO₄, KH₂PO₄, K₂HPO₄, Na₂HPO₄·12H₂O et (NH₄)₃PO₄·3PH₂O dans la bouillie aqueuse, et
l'introduction de CO₂ gazeux dans la bouillie aqueuse pour provoquer la réaction de carbonatation,
afin de produire ainsi un carbonate de calcium sous forme de cristal d'aragonite ayant une morphologie aciculaire et une taille de particule de 10 à 100 »m sur 0,5 à 4,0 »m.

2. Procédé selon la revendication 1, dans lequel le carbonate de calcium sous forme de cristal d'aragonite est préalablement mélangé au Ca(OH)₂ selon un rapport molaire de 1:10 à 1:2000.

3. Procédé selon la revendication 1, dans lequel le carbonate de calcium sous forme de cristal d'aragonite devant être préalablement mélangé à la bouillie aqueuse de Ca(OH)₂ présente une morphologie aciculaire de 0,5-10,0 »m suivant le diamètre long et de 0,1-1,0 »m suivant le diamètre court.

4. Procédé selon la revendication 1, dans lequel la réaction carbonatation est répétée au moins deux fois.

5. Procédé selon la revendication 4, dans lequel le carbonate de calcium sous forme de cristal d'aragonite devant être préalablement mélangé à la bouillie aqueuse de Ca(OH)₂ après la seconde carbonatation, a un diamètre long de 5-50 »m et un diamètre court de 0,5-4,0 »m.

6. Procédé selon les revendications 1 ou 4, dans lequel la concentration de la bouillie mélangée en carbonate de calcium sous forme de cristal d'aragonite et en Ca(OH)₂ est de 30 à 250 g/l.

7. Procédé selon les revendications 1 ou 4, dans lequel la quantité introduite de CO₂ gazeux sous forme de CO₂ à 100% ne dépasse pas 4 l/min/kg.Ca(OH)₂.

8. Procédé selon les revendications 1 ou 4, dans lequel la température de la réaction de carbonatation est de 20-80°C.

9. Procédé selon la revendication 1, dans lequel une quantité ajoutée d'au moins un composé sélectionné dans le groupe constitué de H₃PO₄, K₃PO₄, KH₂PO₄, K₂HPO₄, Na₂HPO₄·12H₂O et (NH₄)₃PO₄·3PH₂O est de 0,1-15% en poids par rapport au Ca(OH)₂.
